# EUROPEAN PATENT SPECIFICATION

(11) **EP 3 740 037 B1**
(45) Date of publication and mention of the grant of the patent: **15.06.2022**
(21) Application number: 19174299.8
(22) Date of filing: 14.05.2019
(51) Int. Cl.: H05B 45/37, H05B 47/20, H05B 47/175, H01M 10/42

(54) **EMERGENCY DRIVER**
NOTTREIBER
PILOTE D'URGENCE

(43) Date of publication of application: 18.11.2020
(73) Proprietor: Tridonic GmbH & Co. KG, 6851 Dornbirn (AT)
(72) Inventor: Dalby, Paul, Cleveland, TS5 7LP (GB); Makwana, Deepak, Newcastle Upon Tyne, NE5 2DJ (GB)
(74) Representative: Rupp, Christian

(56) References cited:
- WO-A1-2005/032218
- WO-A1-2016/168073
- DE-U1-202018 100 687

## Description

### TECHNICAL FIELD OF THE INVENTION

The invention relates to an emergency driver comprising a so-called maintained driver and an emergency driver module.

### BACKGROUND OF THE INVENTION

Emergency lighting and hence emergency drivers should be comprised in buildings according to regulatory requirements.

The invention relates to a particular category of emergency drivers including a maintained driver and emergency driver module inside one luminaire in a way that in the presence of AC mains the maintained driver will deliver the light output. The emergency driver module charges the battery and provides the light output on mains failure.

According to regulatory requirements the emergency driver should have a log of the functionality check. For basic emergency drivers without any connectivity, a manual inspection is mandatory. However, premium emergency drivers typically have DALI connectivity, which is a wired system for central monitoring.

However, emergency drivers provided with a wired connectivity are costly and the wiring increases the complexity of the emergency drivers.

Thus, it is an objective to provide for an improved emergency driver.

WO 2016168073 A1 discloses an emergency driver in accordance with the preamble of independent claim 1.

### SUMMARY OF THE INVENTION

The object of the present invention is achieved by the solution provided in the enclosed independent claim 1.

Advantageous implementations of the present invention are further defined in the dependent claims.

According to a first aspect, the invention relates to an emergency driver. The emergency driver comprises a maintained driver, wherein the maintained driver is designed for driving lighting means based on a mains AC-supply voltage, and an emergency driver module designed to drive said lighting means starting from a DC voltage battery supply and to charge said DC voltage battery supply on the basis of said AC supply voltage. The emergency driver module and the maintained driver are provided with an interface for wireless communication between the maintained driver and the emergency driver module.

This provides the advantage that the communication between the emergency driver module and maintained driver is facilitated, since a wireless communication is used and, therefore, the costs and complexity of wiring techniques can be avoided.

In a preferred embodiment of the first aspect, the maintained driver or the emergency driver module has a further interface for an external communication.

In a further preferred embodiment of the first aspect, a switched driver stage is comprised in each of the maintained driver and emergency driver module.

In a further preferred embodiment of the first aspect, the maintained driver comprises a first control unit and the emergency driver module comprises a second control unit and wherein the first control unit and the second control unit are configured to communicate at least unidirectional using the wireless communication interface.

In a further preferred embodiment of the first aspect, the first control unit is configured to collect emergency reporting data or configuration data about the emergency driver and to communicate the emergency reporting data or configuration data via the wireless communication interface.

In a further preferred embodiment of the first aspect, the maintained driver or the emergency driver module is provided with a wire bound communication interface, for example a digital addressable lighting interface (DALI).

In a further preferred embodiment of the first aspect, the emergency driver module comprises a circuitry to detect a mains failure and to operate off the battery.

In a further preferred embodiment of the first aspect, the lighting means are light-emitting diodes (LEDs).

In accordance with the first aspect of the invention, the wireless communication between the maintained driver and the emergency driver module is a near field communication (NFC), wherein the air gap for the NFC is less than 10 cm.

According to a second aspect, the invention relates to a luminaire comprising a housing enclosing an emergency driver according to the first aspect as well as lighting means, wherein the battery is comprised in the housing of the luminaire.

The application further concerns a method for driving lighting means using an emergency driver, comprising the following steps:
- driving lighting means based on a mains AC-supply voltage;
- driving said lighting means starting from a DC voltage battery supply;
- charging said DC voltage battery supply on the basis of said AC supply voltage; and
- providing the emergency driver module and the maintained driver of the emergency driver with an interface for wireless communication between the maintained driver and the emergency driver module,
wherein the wireless communication between the maintained driver and the emergency driver module is a near field communication (NFC),
wherein the air gap for the NFC is less than 10 cm.

### BRIEF DESCRIPTION OF THE DRAWINGS

The invention will be explained in the followings together with the figures.
- Fig. 1: shows an emergency driver according to the invention;
- Fig. 2: shows a further exemplary embodiment of the emergency driver according to the invention.
- Fig. 3: shows a schematic representation of a luminaire figures comprising the emergency driver according to 1 or 2; and
- Fig. 4: shows a method for driving lighting means using an emergency driver.

### DETAILED DESCRIPTION OF THE PREFERRED EMBODIMENTS

Aspects of the present invention are described herein in the context of an emergency driver.

The present invention is described more fully hereinafter with reference to the accompanying drawings, in which various aspects of the present invention are shown.

The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of an emergency driver will be presented.

The term "LED luminaire" shall mean a luminaire with a light source comprising one or more LEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

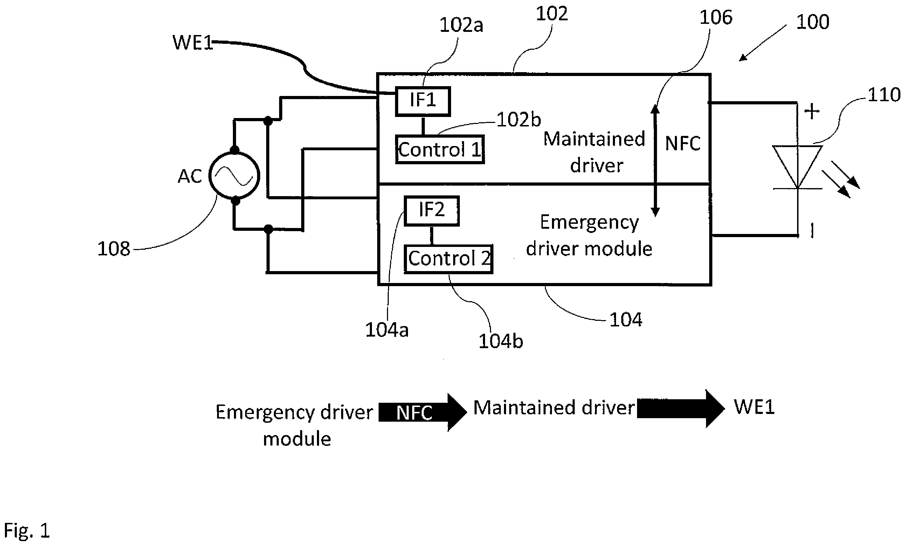

Now referring to Fig. 1, an emergency driver 100 according to the invention is shown.

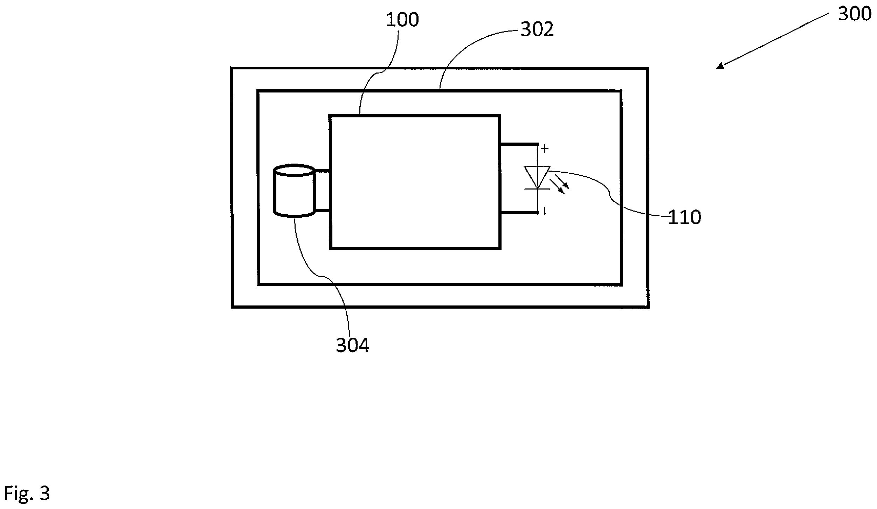

The emergency driver 100 comprises a maintained driver 102, wherein the maintained driver 102 is designed for driving lighting means 110 based on a mains AC-supply voltage 108, and an emergency driver module 104 designed to drive said lighting means 110 starting from a DC voltage battery 304 (Fig. 3) supply and to charge said DC voltage battery 304 supply on the basis of said AC supply voltage 108.

Moreover, the emergency driver module 104 and the maintained driver 102 are provided with an interface 106 for wireless communication between the maintained driver 102 and the emergency driver module 104.

Furthermore, in this embodiment, the maintained driver 102 and the emergency driver module 104 have a further interface 102a, 104a, respectively for an external communication with wireless connectivity WE1.

The maintained driver 102 and the emergency driver module 104 can communicate with each other e.g. in order to send their configuration or reporting data to/from the wireless connectivity WE1.

In the embodiment shown in Fig. 1, the emergency driver module 104 triggers the communication when it needs to update configuration and/or reporting of emergency data.

The emergency driver module 104 communicates with the maintained driver 102 using a wireless means such as e.g. NFC. Once the data of the emergency driver module 104 is collected by the maintained driver 102, the maintained driver 102 then can use its preferably wireless connectivity to send emergency reporting data via WE1.

In an embodiment, the maintained driver 102 and emergency driver module 104 comprise each a switched driver stage for controlling the light output.

Moreover, the maintained driver 102 can comprise a first control unit 102b and the emergency driver module 104 can comprise a second control unit 104b. Furthermore, the first control unit 102b and the second control unit 104b can be configured to communicate at least unidirectional using the wireless communication interface 106.

The first control unit 102b can be configured to collect emergency reporting data or configuration data about the emergency driver 100 and to communicate the emergency reporting data or configuration data via the wireless communication interface 106.

In another yet embodiment, the maintained driver 102 or the emergency driver module 104 can be provided with a wire bound communication interface, for example a digital addressable lighting interface (DALI).

The wireless communication between the maintained driver 102 and the emergency driver module 104 is a near field communication (NFC), wherein the air gap for the NFC is less than 10 cm.

The lighting means 110 can be light-emitting diodes (LEDs) including OLEDs.

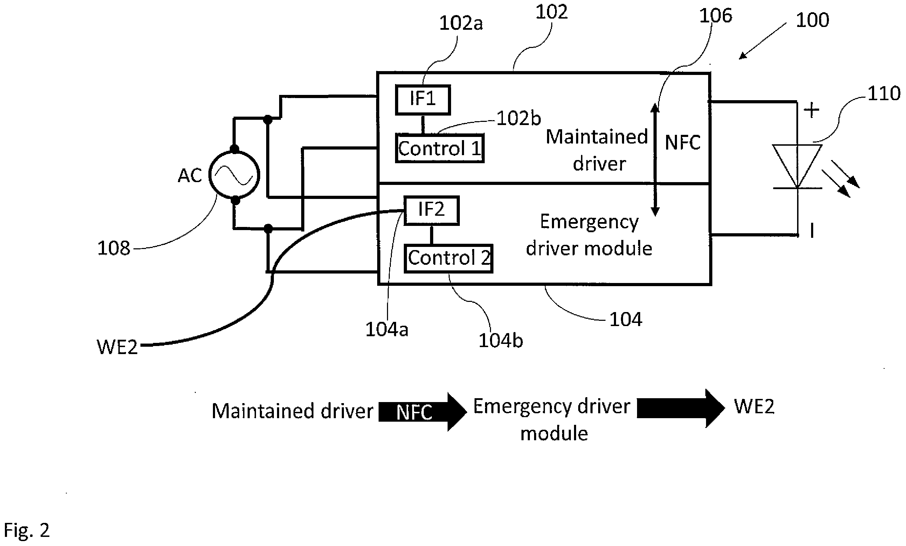

Fig. 2 shows a further exemplary embodiment of the emergency driver 100 according to the invention.

The embodiment shown in Fig. 2 is similar to the one shown in Fig. 1, besides that, in this embodiment, the maintained driver 102 triggers the communication when it needs to update the configuration and/or reporting of maintained driver data.

The maintained driver data can comprise data about a black box or a sensor, if anyone is connected.

Fig. 3 shows a schematic representation of a luminaire 300 comprising the emergency driver 100 according to figure 1 or 2.

In this embodiment the luminaire 300 further comprises a housing 302 enclosing the emergency driver 100 as well as lighting means 110, for example LEDs, wherein the battery 304 is comprised in the housing 302 of the luminaire.

The emergency driver module 104 can furthermore comprise a circuitry to detect a mains failure and to operate off the battery 304.

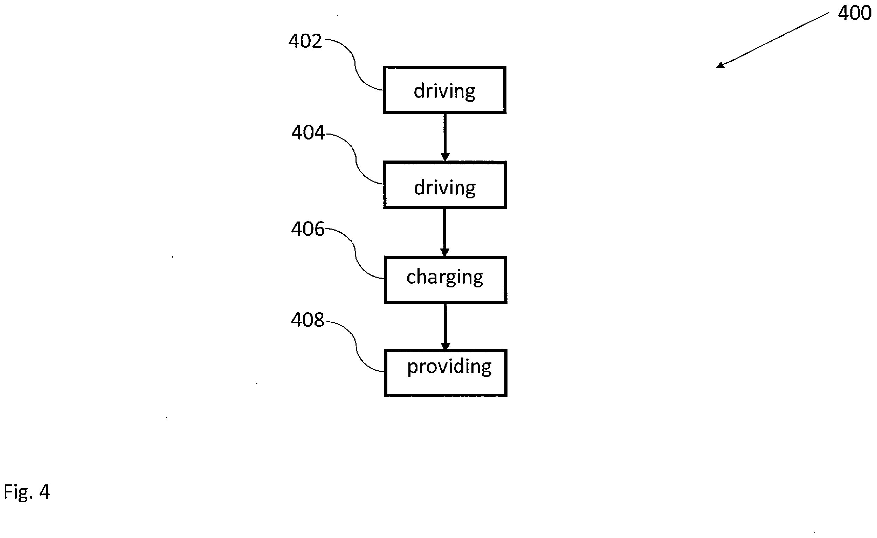

Fig. 4 shows a method 400 for driving lighting means using an emergency driver 100.

The method 400 comprises the steps of:
- driving 402 lighting means 110 based on a mains AC-supply voltage 108;
- driving 404 said lighting means 110 starting from a DC voltage battery 304 supply;
- charging 406 said DC voltage battery 304 supply on the basis of said AC supply voltage 108; and
- providing 408 the emergency driver module 104 and the maintained driver 102 of the emergency driver 100 with an interface 106 for wireless communication between the maintained driver 102 and the emergency driver module 104.

## Claims

1. An emergency driver (100), comprising:
- a maintained driver (102), wherein the maintained driver (102) is adapted to drive lighting means (110) based on a mains AC supply voltage (108), and
- an emergency driver module (104) adapted to drive said lighting means (110) starting from a DC voltage supply from a battery (304) and to charge said DC voltage supply on the basis of said mains AC supply voltage (108),
- wherein the emergency driver module (104) and the maintained driver (102) comprise a wireless communication interface (106) for wireless communication between the maintained driver (102) and the emergency driver module (104),
**characterized in that**
- the wireless communication between the maintained driver and the emergency driver module is a near field communication, , wherein the air gap for the NFC is less than 10 cm.

2. The emergency driver (100) of claim 1, wherein the maintained driver (102) or the emergency driver module (104) has a further interface (102a, 104a) for an external communication.

3. The emergency driver (100) of claim 1 or 2, wherein a switched driver stage is comprised in each of the maintained driver (102) and emergency driver module (104) .

4. The emergency driver (100) of anyone of the preceding claims, wherein the maintained driver (102) comprises a first control unit (102b) and the emergency driver module (104) comprises a second control unit (104b) and wherein the first control unit (102b) and the second control unit (104b) are configured to communicate at least unidirectional using the wireless communication interface (106) .

5. The emergency driver (100) of claim 4, wherein the first control unit (102b) is configured to collect emergency reporting data or configuration data about the emergency driver (100) and to communicate the emergency reporting data or configuration data respectively collected via the wireless communication interface (106).

6. The emergency driver (100) of anyone of the preceding claims, wherein further the maintained driver (102) or the emergency driver module (104) comprises a wire bound communication interface, for example a digital addressable lighting interface, DALI. .

7. The emergency driver (100) of anyone of the preceding claims, wherein the emergency driver module (104) comprises a circuitry to detect a mains failure and to operate off the battery (304).

8. The emergency driver (100) of anyone of the preceding claims, wherein the lighting means (110) are light-emitting diodes, LEDs .

9. Luminaire (300) comprising a housing (302), lighting means (110), a battery (304) and an emergency driver (100) according to any of the preceding claims wherein the housing (302) encloses the emergency driver (100) and the battery (304) is comprised in the housing (302) of the luminaire.

## Patentansprüche

1. Notfalltreiber (100), umfassend:
- einen aufrechterhaltenen Treiber (102), wobei der aufrechterhaltene Treiber (102) dazu ausgelegt ist, Leuchtmittel (110) basierend auf einer Netzwechselspannung (108) anzusteuern, und
- ein Notfalltreibermodul (104), das dazu ausgelegt ist, die Leuchtmittel (110) ausgehend von einer Gleichspannungsversorgung aus einer Batterie (304) anzusteuern und die Gleichspannungsversorgung auf der Basis der Netzwechselspannung (108) zu laden,
- wobei das Notfalltreibermodul (104) und der aufrechterhaltene Treiber (102) eine drahtlose Kommunikationsschnittstelle (106) für drahtlose Kommunikation zwischen dem aufrechterhaltenen Treiber (102) und dem Notfalltreibermodul (104) umfassen,
**dadurch gekennzeichnet, dass**
- die drahtlose Kommunikation zwischen dem aufrechterhaltenen Treiber und dem Notfalltreibermodul eine Nahfeldkommunikation, NFC, ist, wobei der Luftspalt für die NFC weniger als 10 cm beträgt.

2. Notfalltreiber (100) nach Anspruch 1, wobei der aufrechterhaltene Treiber (102) oder das Notfalltreibermodul (104) eine weitere Schnittstelle (102a, 104a) für eine externe Kommunikation aufweist.

3. Notfalltreiber (100) nach Anspruch 1 oder 2, wobei in jedem von dem aufrechterhaltenen Treiber (102) und dem Notfalltreibermodul (104) eine geschaltete Treiberstufe enthalten ist.

4. Notfalltreiber (100) nach einem der vorstehenden Ansprüche, wobei der aufrechterhaltene Treiber (102) eine erste Steuereinheit (102b) umfasst und das Notfalltreibermodul (104) eine zweite Steuereinheit (104b) umfasst und wobei die erste Steuereinheit (102b) und die zweite Steuereinheit (104b) konfiguriert sind, um mindestens unidirektional unter Verwendung der drahtlosen Kommunikationsschnittstelle (106) zu kommunizieren.

5. Notfalltreiber (100) nach Anspruch 4, wobei die erste Steuereinheit (102b) konfiguriert ist, um Notfallmeldungsdaten oder Konfigurationsdaten über den Notfalltreiber (100) zu sammeln und um die jeweils gesammelten Notfallmeldungsdaten oder Konfigurationsdaten über die drahtlose Kommunikationsschnittstelle (106) zu übermitteln.

6. Notfalltreiber (100) nach einem der vorstehenden Ansprüche, wobei ferner der aufrechterhaltene Treiber (102) oder das Notfalltreibermodul (104) eine drahtgebundene Kommunikationsschnittstelle, zum Beispiel eine digitale adressierbare Beleuchtungsschnittstelle, DALI, umfasst.

7. Notfalltreiber (100) nach einem der vorstehenden Ansprüche, wobei das Notfalltreibermodul (104) eine Schaltung zum Erkennen eines Netzausfalls und zum Betrieb mit der Batterie (304) umfasst.

8. Notfalltreiber (100) nach einem der vorstehenden Ansprüche, wobei die Leuchtmittel (110) Leuchtdioden, LEDs, sind.

9. Leuchte (300) umfassend ein Gehäuse (302), Leuchtmittel (110), eine Batterie (304) und einen Notfalltreiber (100) nach einem der vorstehenden Ansprüche, wobei das Gehäuse (302) den Notfalltreiber (100) umschließt und die Batterie (304) im Gehäuse (302) der Leuchte enthalten ist.

## Revendications

1. Circuit d'attaque de secours (100), comprenant :
- un circuit d'attaque maintenu (102), dans lequel le circuit d'attaque maintenu (102) est adapté pour attaquer des moyens d'éclairage (110) sur la base d'une tension d'alimentation en courant alternatif du secteur (108) et
- un module de circuit d'attaque de secours (104) adapté pour attaquer lesdits moyens d'éclairage (110) à partir d'une alimentation en tension continue provenant d'une batterie (304) et pour charger ladite alimentation en tension continue sur la base de ladite tension d'alimentation en courant alternatif du secteur (108),
- dans lequel le module de circuit d'attaque de secours (104) et le circuit d'attaque maintenu (102) comprennent une interface de communication sans fil (106) pour une communication sans fil entre le circuit d'attaque maintenu (102) et le module de circuit d'attaque de secours (104),
**caractérisé en ce que**
- la communication sans fil entre le circuit d'attaque maintenu et le module de circuit d'attaque de secours est une communication en champ proche, NFC, dans lequel l'entrefer pour la NFC est inférieur à 10 cm.

2. Circuit d'attaque de secours (100) selon la revendication 1, dans lequel le circuit d'attaque maintenu (102) ou le module de circuit d'attaque de secours (104) possède une autre interface (102a, 104a) pour une communication externe.

3. Circuit d'attaque de secours (100) selon la revendication 1 ou 2, dans lequel un étage de circuit d'attaque commuté est compris dans chacun du circuit d'attaque maintenu (102) et du module de circuit d'attaque de secours (104).

4. Circuit d'attaque de secours (100) selon l'une quelconque des revendications précédentes, dans lequel le circuit d'attaque maintenu (102) comprend une première unité de commande (102b) et le module de circuit d'attaque de secours (104) comprend une seconde unité de commande (104b) et dans lequel la première unité de commande (102b) et la seconde unité de commande (104b) sont configurées pour communiquer au moins de manière unidirectionnelle en utilisant l'interface de communication sans fil (106).

5. Circuit d'attaque de secours (100) selon la revendication 4, dans lequel la première unité de commande (102b) est configurée pour collecter des données de rapport de secours ou des données de configuration concernant le circuit d'attaque de secours (100) et pour communiquer les données de rapport de secours ou les données de configuration respectivement collectées par le biais de l'interface de communication sans fil (106).

6. Circuit d'attaque de secours (100) selon l'une quelconque des revendications précédentes, dans lequel en outre le circuit d'attaque maintenu (102) ou le module de circuit d'attaque de secours (104) comprend une interface de communication filaire, par exemple une interface d'éclairage adressable numérique, DALI.

7. Circuit d'attaque de secours (100) selon l'une quelconque des revendications précédentes, dans lequel le module de circuit d'attaque de secours (104) comprend un ensemble de circuits pour détecter une panne de secteur et pour fonctionner sur la batterie (304).

8. Circuit d'attaque de secours (100) selon l'une quelconque des revendications précédentes, dans lequel les moyens d'éclairage (110) sont des diodes électroluminescentes, DEL.

9. Luminaire (300) comprenant un boîtier (302), des moyens d'éclairage (110), une batterie (304) et un circuit d'attaque de secours (100) selon l'une quelconque des revendications précédentes, dans lequel le boîtier (302) renferme le circuit d'attaque de secours (100) et la batterie (304) est comprise dans le boîtier (302) du luminaire.
